# EUROPEAN PATENT APPLICATION

(11) **EP 0 808 691 A2**
(43) Date of publication of application: **26.11.1997**
(21) Application number: 97830226.3
(22) Date of filing: 16.05.1997
(51) Int. Cl.: B23Q 11/08, B23Q 1/66

(54) **Protective structure for machine tools with fixed frame and rotary table or tables**

(30) Priority: 21.05.1996 IT BS960048
(71) Applicant: C.M.S. Costruzioni Macchine Speciali S.p.A., 24019 Zogno (Bergamo) (IT)
(72) Inventor: Aceti, Pietro, 24100 Bergamo (IT)
(74) Representative: Manzoni, Alessandro

(57) **Abstract**

It is a protective structure for operating head (10) type tool machines, including those with numerical control. It is made up of a protective cabin (15) attached to the frame of the machine placed at the same level as the supporting traverse bar of the operating head (10) to protect the head itself throughout all its movements, an apron or enclosure (17) attached to the frame and enveloping the worktable or tables up to the level of the same, and at least one cover (19,20) placed between the protective cabin (15) and the apron or enclosure (17) resting on the latter so as to remain above and protect a respective worktable.

## Description

The present invention concerns both the machine tools and machining centres sectors, including machines with numerical control, for machining wooden or plastic parts etc.. In particular the invention envolves a protective structure for machine tools with fixed frame and rotary table or tables.
Usually these machines have an operating head which can move horizontally or vertically along a bridge frame having one or two worktables placed side by side, which can move at least horizontally at right angles to the movements of the head.

As regards protections for containment of dust and against dangerous projections of shavings these machines at present may be equipped either with a guard or protective box covering placed around the work head moving together with the same and skimming the items on the worktables or by an enclosure or protective cabin enclosing all the machine.

In the first case the part protected is limited to the head and area on the table where machining is taking place, leaving the problem of effective dust seal and protection of parts of table not envolved in machining still open. In the second case, the protection system is cumbersome and creates problems of access to the worktables, to automatic loading/unloading system of items etc.

The present invention is aimed at avoiding the abovementioned inconveniences and disadvantages and at proposing a new, original and efficient protective structure for the aforesaid machine tools protecting both the head and the worktable or tables.

To this purpose, the present invention proposes a protective structure for tool machines, including those with numerical control, with a machining head which can move horizontally or vertically along a traverse bar of a bridge frame and have at least one worktable able to move horizontally at right angles to the movements of the head.
A protective box covering is fixed to said frame at the same level as the traverse bar of the operating head so as to protect the said head at all times during its movements.

An apron or enclosure is fixed to this frame and envelopes the worktable or tables up to the same height.

One covering at least is placed between the protective box covering and the apron or enclosure, resting on the latter so as to be higher than and protect a respective worktable.

This invention can be applied to machines with only one worktable, but it is more advantageous to machines having two side by side worktables which can be used independently of each other or together as a single worktable where pieces have to be machined which are of a size which would not allow them to fit or rest on just one.
Even more favourable is the structure which is made up of elements which are all stationary and do not have to move together with any moving part of the machine, even if some of them can be moved/opened to enable access to the operating head or worktables.
Another advantage of the protective structure proposed here is that it does not impair free access to each table even when equipped for automatic loading and unloading of items.

In short, the protective structure of the invention has a limited overall size, guarantees safety against projected shavings and material, protects all moving parts so as to avoid accidents and leaves ample space for access to the various parts of the machine during maintenance.

The enclosed drawings, although in sketch form, illustrate practical examples of the use of the protective structure of the invention.

In said drawings:
Fig.1 is a view in perspective of the machine complete with protection;
Fig. 2 is a plan view of Fig. 1.
Fig.3 is a cross section from points III to III in Fig.2
Fig. 4 is a detail of a movable or foldaway division; and
Figs. 5 and 6 are two different configurations for the cover over the worktables.

The machine which this invention can be fitted with includes an operating head 10 and one or better if two, worktables 11,12, as shown in drawings. The operating head 10 can be moved at least in a horizontal and vertical direction along a traverse bar 13' of a bridge frame 13 above worktables 11,12.
These worktables 11,12 are also driven and can traverse horizontally along a bench 10' at right angles to the movements of the head 10. The tables, as is known, are equipped with chucks 14, are positioned in parallel side by side and can traverse both independently of each other for independent work or together as a single table if required by specific work. Each worktable is positioned and moves on a slide 10" and in the case of need it can also slide out completely from under the head and this is used in particular where the worktable is deeper than the stroke of the carriage.

The frame 13, bears a protective cabin protection 15 which is partially or totally transparent and fixed above the worktables at the same level as and for the whole length of traverse bar 13' which supports the operating head 10.
Head 10 thus moves within the enclosure 15 and can be positioned and function on each table 11,12.

At the opposite ends of enclosure 15 there are two corner cabins 16, which are hinged and openable in order to be able to reach the head 10 for tool changes, maintenance, etc., when the head is in the vicinity of either of the two corner cabins. In preference each corner cabin 16 is also equipped with an entrance door 16'.

An apron or enclosure 17 made of sheet metal or other suitable material, not touching the floor and slightly higher than the worktables, is fastened to the frame 13 at a lower level than the protective cabin 15. This apron 17 envelopes the worktables 11,12, along the front side and the opposite ends. The apron 17 forms a barrier which prevents approach to tables but can be accessed for cleaning the floor.

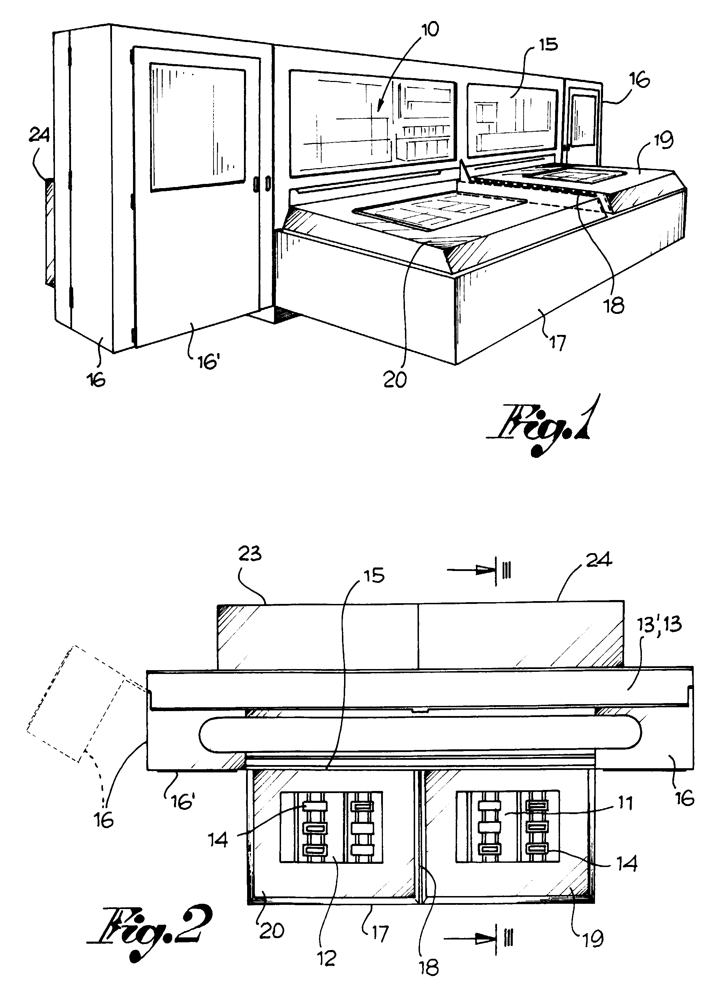

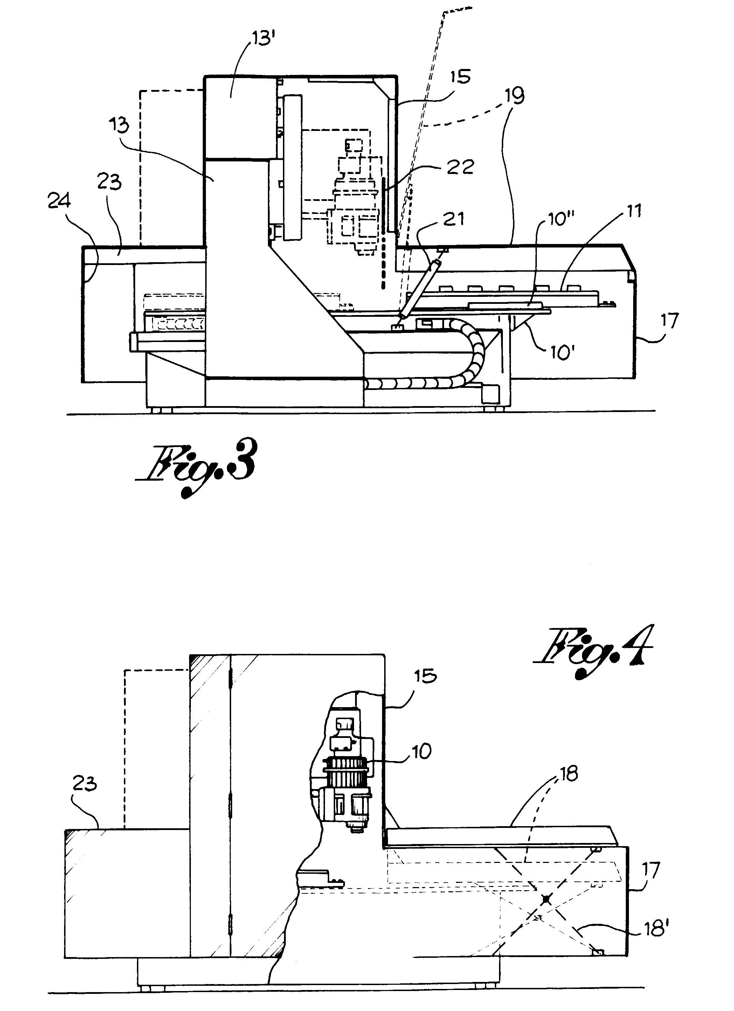

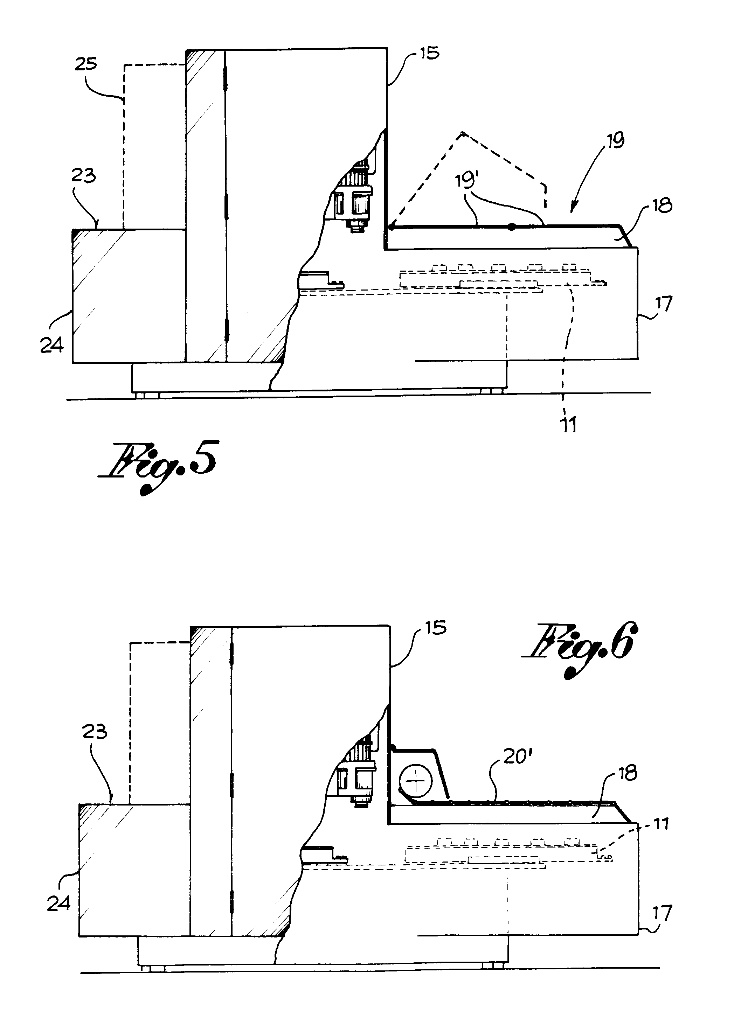

In the space between the two side by side worktables 11,12 a division 18 is provided which extends from the protective cabin 15 to the front side of the apron 17. The advantage being that if and when the tables have to be used at the same time this division 18 can be removed so that a large sized item can be supported and machined. Alternatively and for the same reason, division 18, instead of being removed can be mechanically and/or pneumatically controlled 18' in order to be lifted into position when used and lowered into a protected position below the worktables when not in use - see Fig.4-When the intermediate division 18 is in the operating position, it is at the same level as the top of the apron 17 and forms a support for covers 19,20 which enclose from above the areas where the worktables are to be found thus preventing dispersion of dust and projection of material.
Each cover 19,20 can be in the shape of a door hinged along one side and connected to at least one actuator which could be for example a pneumatic cylinder 21. Each door can, in this way, be tipped from a lowered protection position above the respective worktable to a lifted position in order to access the worktable as shown in Fig.3.

Each cover 19,20, depending on the sizes of the machine and worktables and presence of tool-changes, etc., can also be made up of two or three articulated and foldable parts 19' as shown in Fig.5. Following another solution each cover can be made up of a roll-up section 20' similar to a rolling shutter as shown in Fig.6.

Anyway, when the covers are open each worktable can be accessed, even separately, in order to carry out the necessary operations freely, including automatic loading and unloading of items, and maintenance.

Each cover 19,20 can have or not have at least one transparent part which enables vision of the worktable below even when closed. This can also be equipped or integrated by a shutter 22 which, when the cover is open, positions itself so as to close that space between the worktable in question and the cover which would otherwise remain open and could allow material to be projected from the other worktable if in operation.

A shelf 23 placed at a level higher than the worktables will be provided behind the frame. A protective screen 24 has been erected below the shelf so that movements towards the rear side of the worktables will not be hindered even though that part of the worktables will be hidden and protected. The area above the shelf can be used to house boxes 25 for drive, control, mechanical, pneumatic, electric and electronic equipment etc. of the machine.

As one can appreciate from the drawings, the machine with the protective structure in the present invention is very compact and closed, offering the best possible protection and safety besides a pleasant appearance and easy access to the working parts.

## Claims

1. Protective structure for operating head (10) type tool machines, including those with numerical control, with at least horizontal and vertical traverse along a traverse bar of a bridge frame (13) and with at least one worktable (11,12) which can move horizontally at right angles to the movement of the operating head. This structure is characterised by a protective cabin (15) fixed to a frame (13) at the same level as the traverse bar supporting the operating head (10) to protect the head along the whole length of its traverse and by an apron or enclosure (17) fixed to said frame and enveloping the worktable or tables (11,12) at the same height at least as the latter and furthermore by at least one openable cover (19,20) placed between said protective cabin (15) and said apron or enclosure (17) resting on the latter so as to be above and to protect the respective worktable.

2. Protective structure in compliance with claim 1 for a machine with two side by side worktables (11,12) which can be used independently one of the other or at the same time acting as a single worktable. This structure is characterised by the fact that said apron or enclosure (17) runs parallel to the front sides and opposite external ends of said worktables and by the fact that it forms a cover (19,20) over each of these worktables and that the covers, resting on said apron or enclosure and on an intermediate division (18) allow independent access to each table.

3. Protective structure in compliance with claims 1 or 2 where the cover or each cover (19,20) is hinged along one side and can be governed by an actuator (21) moving it from a closed position to an open position to open or close the space above the respective worktable.

4. Protective structure in compliance with claim 3 where each cover (19,20) has the shape of a door and can be moved at an angle to carry out the opening or closing operations.

5. Protective structure in compliance with claim 3 where each cover (19') is made up of two or more articulated and foldable elements to carry out opening and closing movements.

6. Protective structure in compliance with claims 1 or 2 where the cover or each cover (19,20) is the roll-up type.

7. Protective structure in compliance with claim 2 where the intermediate division (18) can be removed or moved into a protected position below the worktables when the latter are being used and move together as a single worktable.

8. Protective structure in compliance with claim 7 where each cover (19, 20) is equipped or integrated with a shutter (22) which positions itself so as to close that space between the worktable in question and the cover when said cover is in the open position.

9. Protective structure in compliance with any of the previous claims where said apron or enclosure is raised off the floor.

10. Protective structure in compliance with any of the previous claims where two openable corner cabins (16) at the same level as the operating head are installed on the opposite ends of said protective cabin (15).

11. Protective structure in compliance with claim 10, where each corner cabin has an entrance door (16').

12. Protective structure in compliance with any of the previous claims where a protective screen is fixed to the frame on the side opposite the apron or enclosure with covers at the same level as the worktables and below a shelf on which one, two or more boxes for drive and control equipment of the machine can be housed.
